# EUROPÄISCHE PATENTSCHRIFT

(11) **EP 3 224 085 B1**
(45) Veröffentlichungstag und Bekanntmachung des Hinweises auf die Patenterteilung: **29.12.2021**
(21) Anmeldenummer: 15808072.1
(22) Anmeldetag: 12.11.2015
(51) Int. Cl.: F21S 45/70, F21S 41/176

(54) **BELEUCHTUNGSVORRICHTUNG FÜR EIN KRAFTFAHRZEUG**
ILLUMINATION APPARATUS FOR A MOTOR VEHICLE
DISPOSITIF D'ÉCLAIRAGE POUR VÉHICULE AUTOMOBILE

(30) Priorität: 26.11.2014 AT 508542014
(43) Veröffentlichungstag der Anmeldung: 04.10.2017
(73) Patentinhaber: ZKW Group GmbH, 3250 Wieselburg (AT)
(72) Erfinder: SCHRAGL, Martin, A-3261 Zarnsdorf (AT); BEMMER, Christian, A-3660 Klein-Pöchlarn (AT)
(74) Vertreter: Patentanwaltskanzlei Matschnig & Forsthuber OG
(86) Internationale Anmeldenummer: PCT/AT2015/050288
(87) Internationale Veröffentlichungsnummer: WO 2016/081967

(56) Entgegenhaltungen:
- EP-A2- 2 541 129
- DE-A1-102012 220 472
- DE-A1-102012 220 481
- DE-A1-102013 016 423
- JP-A- 2013 187 145
- US-A1- 2011 211 243
- US-A1- 2012 104 934
- US-A1- 2012 106 188

## Beschreibung

Die Erfindung betrifft eine Beleuchtungsvorrichtung, insbesondere für ein Kraftfahrzeug, gemäß dem Oberbegriff des Anspruchs 1.

Weiters betrifft die Erfindung einen Kraftfahrzeugscheinwerfer mit zumindest einer solchen Beleuchtungsvorrichtung sowie ein Kraftfahrzeug mit zumindest einer solchen Beleuchtungsvorrichtung bzw. mit zumindest einem solchen Kraftfahrzeugscheinwerfer.

Eine solche Beleuchtungsvorrichtung ist aus DE102012220481 A1 bekannt. Laserlichtquellen (z.B. Halbleiterlaser, Laserdioden) weisen eine Reihe von speziellen vorteilhaften Eigenschaften, wie z.B. hohe Strahlungsintensitäten und eine kleine lichtemittierende Fläche. Außerdem sind die ausgestrahlten Lichtbündel weitestgehend kollimiert.

Daraus ergeben sich für die Verwendung von Laserlichtquellen zu Beleuchtungszwecken eine Reihe von Vorteilen, z.B. können optische Systeme, bei denen als Lichtquelle eine Laserlichtquelle zum Einsatz kommt, mit kleineren Brennweiten und stärker gebündelten Strahlverläufen realisiert werden. Mit weniger stark kollimierten Lichtbündeln (beispielsweise von Glühlampen oder Leuchtdioden (LEDs)) ist dies nicht möglich. Es lassen sich somit bei Verwendung von Laserlichtquellen optische Systeme für Laserlicht mit geringem Bauraum realisieren.

Laser strahlen Laser in der Regel monochromatisches Licht oder Licht in einem engen Wellenlängenbereich aus. Bei einem Kfz-Scheinwerfer ist allerdings für das abgestrahlte Licht weißes Mischlicht erwünscht oder gesetzlich vorgeschrieben, sodass sich Laserlichtquellen in einem Kfz-Scheinwerfer nicht ohne weiteres einsetzen lassen.

Zusätzlich ergibt sich bei der Verwendung von Laserlichtquellen das Problem, dass diese gefährlich sein können, insbesondere für das menschliche Auge. Dies resultiert daraus, dass Laser üblicherweise kohärentes und stark kollimiertes Licht ausstrahlen, welches bei den typischen hohen Strahlungsintensitäten von Laserlichtquellen potenziell gefährlich ist. Dies gilt insbesondere bei Strahlungsleistungen von einigen Watt, wie sie im Bereich der Kfz-Beleuchtung erwünscht ist.

Es müssen daher, um Laserlichtquellen im Kfz-Bereich, insbesondere bei Kfz-Scheinwerfern einsetzen zu können, Sicherheitsvorschriften zum Betrieb von Lasereinrichtungen sichergestellt sein. Dabei ist insbesondere sicherzustellen, dass Licht (Laserlicht) aus einem Kfz-Scheinwerfer nur mit einer Intensität unterhalb von vorgeschriebenen Grenzwerten austritt. Außerdem muss eine Blendung oder Gefährdung von Verkehrsteilnehmern vermieden werden.

Zusätzlich muss die Einhaltung der Sicherheitsanforderungen auch dann gewährleistet sein, wenn die Beleuchtungsvorrichtung verformt oder dejustiert wird, etwa durch mechanische Einwirkung, bei einem Unfall oder durch einen Montagefehler. Auch in diesen Fällen muss für die Beleuchtungsvorrichtung bzw. den Kfz-Scheinwerfer die Einhaltung der Sicherheitsvorschriften für den Betrieb von Laseranlagen gewährleistet sein.

Zur Umwandlung von monochromatischem Licht in weißes oder polychromatisches Licht werden im Zusammenhang mit weißen Leuchtdioden (LEDs) oder Lumineszenzkonversions-LEDs häufig sogenannte Konversionselemente (in diesem Text auch als Wellenlängen-Konversionselement bezeichnet) verwendet. Ein solches Konversionselement ist z.B. in Form eines Photolumineszenzkonverters oder Photolumineszenzelementes ausgebildet oder umfasst zumindest einen Photolumineszenzkonverter oder zumindest ein Photolumineszenzelement. Diese weisen in der Regel einen Photolumineszenzfarbstoff auf.

Das Licht einer üblicherweise farbiges (z.B. blaues) Licht (auch als "Anregungs-Licht" bezeichnet) ausstrahlenden LED regt den Photolumineszenzfarbstoff zur Photolumineszenz an, worauf der Photolumineszenzfarbstoff selbst Licht anderer Wellenlängen (z.B. gelb) abgibt. Auf diese Weise kann ein Teil des eingestrahlten Lichts eines Wellenlängenbereichs in Licht eines anderen Wellenlängenbereichs umgewandelt werden. In der Regel wird ein weiterer Anteil des eingestrahlten Lichts (Anregungs-Lichts) von dem Photolumineszenzelement gestreut und/oder reflektiert. Das gestreute und/oder reflektierte Licht und das durch Photolumineszenz ausgestrahlte Licht überlagern sich dann additiv und führen z.B. zu weißem Mischlicht. Der Mechanismus der Photolumineszenz kann je nach Lebensdauer des angeregten Zustands in Fluoreszenz (kurze Lebensdauer) und Phosphoreszenz (lange Lebensdauer) unterschieden werden.

Bei den Konversionselementen wird zwischen reflektiven und transmissiven Konversionselementen unterschieden. Bei reflektiven Konversionselementen wird das von dem Konversionselemente umgewandelte Licht auf derselben Seite abgestrahlt, auf welcher das Anregungs-Licht auf das Konversionselement trifft. Bei transmissiven Konversionselementen wird das umgewandelte Licht von jener Seite, welche der Seit, auf welche das Anregungs-Licht auftrifft, abgewandt ist, abgestrahlt.

Bei der Verwendung von Konversionselementen in Kfz-Scheinwerfern im Zusammenhang mit einer Laserlichtquelle hat das Konversionselement eine hohe sicherheitsrelevante Bedeutung. Bei einer Veränderung der Position des Konversionselements oder bei der Zerstörung des Konversionselementes (z.B. durch mechanische Einwirkung, Unfall, Fertigungsfehler oder Konstruktionsfehler) können stark gebündelte Laserstrahlen aus dem Kfz-Scheinwerfer austreten.

Es ist eine Aufgabe der vorliegenden Erfindung, eine eingangs erwähnte Beleuchtungsvorrichtung für Kraftfahrzeuge, wobei die Beleuchtungsvorrichtung zumindest eine Laserlichtquelle aufweist, derart zu gestalten, dass eine Gefährdung durch austretendes Anregungs-Licht der Laserlichtquelle weitestgehend vermieden werden und die Beleuchtungsvorrichtung den, beispielsweise gesetzlich, vorgeschriebenen Sicherheitsanforderungen entspricht.

Diese Aufgabe wird mit einer eingangs erwähnten Beleuchtungsvorrichtung mit den Merkmalen des Anspruchs 1 gelöst.

Durch das Vorsehen zumindest eines Bereiches auf der Reflektorfläche, welcher Anregungs-Licht aus der Laserlichtquelle, welches auf diese diesen Bereich auftrifft, zumindest teilweise absorbiert, tritt im Fehlerfall Anregungs-Licht über den Reflektor in den Außenraum der Beleuchtungsvorrichtung nur noch geschwächt oder gar nicht mehr aus.

Vorzugsweise ist dabei ein absorbierender Bereich auf dem Reflektor bzw. auf der Reflexionsfläche des Reflektor derart anzuordnen, dass dieser in jenem Bereich liegt, welcher von dem Anregungs-Licht aus der Laserlichtquelle getroffen werden würde, wenn beispielsweise das Konversionselement dejustiert, poröse oder überhaupt weggefallen ist, bzw. ist vorgesehen, dass eine absorbierende Fläche in einem Bereich liegt, in welchen Anregungs-Licht von dem Konversionselement emittiert wird.

Grundsätzlich kann dabei der zumindest eine Bereich, welcher Anregungs-Licht zumindest teilweise absorbiert, aus einem beliebigen Material gebildet sein, es muss lediglich sichergestellt sein, dass von diesem ausreichend Anregungs-Licht im Fehlerfall absorbiert wird. Der absorbierende Bereich wird dabei vorzugsweise für jedes System eigens adaptiert, d.h. auf die Intensität der Lichtquelle, welche Anregungs-Licht emittiert, Fokussierung des Spots usw. abgestimmt. Bei einer Lichtquelle mit geringer Leistung kann es z.B. bereits genügen wenn man die Absorption eines nicht bedampften und nicht geschwärzten Kunststoffes ausnutzt (siehe dazu die Erläuterung weiter unten zu dieser beispielhaften Ausführungsform), bei Lichtquellen mit höherer Leistung kann es notwendig sein, den freigelassenen Bereich noch zu schwärzen, um ausreichend absorbierende Eigenschaften zu erhalten.

Der absorbierende Bereich ist dabei z.B. aus Polycarbonat ("PC", z.B. Makrolon, Apec, etc.), PBT (Polybutylenterephthalat) oder ABS (Acrylnitril-Butadien-Styrol) gebildet. Zusätzlich kann der absorbierende Bereich noch schwarz gefärbt ausgebildet sein, um die Absorption zu erhöhen.

Es kann vorgesehen sein, dass die Reflektorfläche mit einem reflektierenden Material, welches die Reflexionsfläche bildet, beschichtet ist. Bei einem solchen Reflektor kann dann vorgesehen sein, dass in dem zumindest einen Bereich, welcher frei von der Reflexionsfläche ist, die Reflektorfläche nicht mit dem reflektierenden Material beschichtet ist oder das reflektierende Material nach dem Beschichten in dem zumindest einen Bereich entfernt ist, sodass auftreffendes Anregungs-Licht zumindest teilweise an der Reflektorfläche absorbiert wird.

Beispielsweise ist in diesem Fall der Reflektorkörper aus einem oben beschriebenen Material (etwa PC, ABS, PBT) gebildet, sodass es in dem Bereich, in welchem die Reflexionsfläche "weggelassen" ist, zu Absorption zumindest des Anregungs-Lichtes an der Reflektorfläche des Reflektorkörpers kommen kann.

Die reflektierende Oberfläche (Reflexionsfläche) wird im betroffenen Bereich (der Anregungs-Licht absorbieren soll) während der Oberflächenfertigung, z.B. mittels eins Oberflächenbeschichtungsprozesses (z.B. Bedampfen, Verchromen, Sputtern, etc. der Reflektorfläche) mittels z.B. Freilasern oder Abdecken oder Abkleben frei von reflektierendem Material gemacht werden, sodass eine Anregungs-Licht absorbierende Fläche an dem oder den entsprechend bearbeiteten Bereichen gebildet wird.

Es ist vorgesehen, dass der Reflektorkörper zumindest eine Durchgangsöffnung aufweist, wobei die zumindest eine Durchgangsöffnung mit einem Verschlusselement verschlossen ist, wobei die Oberfläche des Verschlusselementes, welche auf der Seite der Reflexionsfläche liegt, den das Anregungs-Licht zumindest teilweise absorbierenden Bereich bildet.

Es können bei einem Reflektor auch zwei oder mehr Anregungs-Licht absorbierende Bereiche vorgesehen sein, wobei diese auch auf unterschiedliche wie oben beschriebene Arten realisiert sein können.

Es ist erfindungsgemäß vorgesehen, dass die Oberfläche des Verschlusselementes die Durchgangsöffnung vollflächig verschließt, sodass es im Bereich zwischen dem Verschlusselement und dem Reflektor zu keinen optischen Störbereichen kommt.

Das Verschlusselement ist derart ausgebildet und/oder derart in die Durchgangsöffnung eingesetzt, dass die Oberfläche im Wesentlichen stetig in die Reflexionsfläche übergeht.

Auf diese Weise kann sichergestellt werden, dass es im Übergangsbereich zwischen der Oberfläche der Durchgangsöffnung und der Reflexionsfläche zu keinen optischen nachteiligen Effekten (z.B. Streuung des Anregungslichtes und/oder des Mischlichtes) kommt.

Bei der Ausführungsform, bei welcher die Reflektorfläche mit der Reflexionsfläche versehen ist, wobei ein oder mehrere Bereiche frei von der Reflexionsfläche bleiben oder frei gemacht werden, ist bei typischen Herstellungsprozessen die Reflexionsfläche derart dünn, dass auch bei einem Freibleiben bzw. Freiseins eines Bereiches ein in lichttechnischer Hinsicht de facto stetiger Übergang gegeben ist.

Unabhängig von der Ausgestaltung des Anregungs-Licht absorbierenden Bereiches ist es von Vorteil, wenn der zumindest eine Anregungs-Licht absorbierende Bereich derart ausgebildet ist, dass das Anregungs-Licht großteils oder vollständig absorbiert wird.

Großteils bedeutet dabei, dass mindestens 70% des einfallenden Anregungs-Lichtes absorbiert werden. Vorzugsweise liegt der Absorptionsgrad bei mindestens 90%, noch mehr bevorzugt bei 99%, insbesondere bei 99,99%.

Der zumindest eine absorbierende Bereich ist oberhalb einer Grenztemperatur nicht temperaturbeständig ausgebildet.

Beispielsweise beträgt die Grenztemperatur 120°C.

Bei der Grenztemperatur handelt es sich beispielsweise um eine Schmelztemperatur, ab welcher das Material des absorbierenden Bereiches zu schmelzen beginnt. Es kann sich bei der Grenztemperatur auch um eine Zersetzungstemperatur handeln, bei welcher sich das Material zu zersetzen beginnt.

Die Temperaturbeständigkeit des Materials des absorbierenden Bereiches hängt beispielsweise von der Farbe des Materials ab, diese kann etwa durch Beimischen von Zusatzstoffen (etwa Rußpartikel, um ein schwarzes Material zu erhalten) in beispielsweise ein Granulat, aus welchem der absorbierende Bereich erzeugt, z.B. mittels Spritzgießens erzeugt wird, beeinflusst werden.

Erwärmt sich der absorbierende Bereich über die jeweilige Grenztemperatur, wird der absorbierende Bereich zerstört, indem er schmilzt oder verbrennt, und das Anregungs-Licht kann anschließend in den Hinterbau der Beleuchtungsvorrichtung gelangen, wo es sich verliert und so keine Gefährdung darstellt.

Wie eingangs schon erwähnt ist es insbesondere von Vorteil, wenn ein Anregungs-Licht absorbierender Bereich derart in bzw. an der Reflektorfläche angeordnet ist, dass direkt von der Laser-Lichtquelle auf der Reflektorfläche auftreffendes Anregungs-Licht und/oder Anregungs-Licht, welches von dem Konversionselement emittiert wird, auf den absorbierenden Bereich auftrifft.

Damit kann insbesondere bei einem Problem mit dem Konversionselement, beispielsweise wenn dieses poröse, zerstört oder dejustiert ist, sichergestellt werden, dass das Anregungs-Licht auf den absorbierenden Bereich gelangt und dort, zumindest teilweise, vorzugsweise großteils, insbesondere vollständig absorbiert wird.

Von Vorteil kann es sein, wenn ein absorbierender Bereich derart angeordnet und hinsichtlich seiner Flächenerstreckung derart ausgebildet ist, dass das gesamte direkt von der Laser-Lichtquelle auf der Reflektorfläche auftreffende Anregungs-Licht und/oder das gesamte Anregungs-Licht, welches von dem Konversionselement emittiert wird, auf den absorbierenden Bereich trifft.

In diesem Fall wird Anregungs-Licht, welches von dem Konversionselement auf den Reflektor emittiert wird und von der Reflexionsfläche nach Außen umgelenkt werden könnte, zumindest teilweise, vorzugsweise großteils, insbesondere vollständig absorbiert.

Es können auch zwei oder mehr absorbierende Bereiche vorgesehen sein, welche entweder alle vom gleichen Typ sind, oder es ist zumindest ein absorbierender Bereich vom oben zuerst beschriebenen Typ und zumindest ein absorbierenden Bereich vom oben als zweite Variante beschriebenen Typ eines absorbierenden Bereiches. Die Bezeichnung "Typ" bezieht sich dabei auf die Anordnung des absorbierenden Bereiches in Bezug auf die Laserlichtquelle bzw. das Konversionselement.

Besonders bevorzugt ist es, wenn ein absorbierender Bereich derart angeordnet und hinsichtlich seiner Flächenerstreckung derart ausgebildet ist, dass das gesamte direkt von der Laser-Lichtquelle auf der Reflektorfläche auftreffende Anregungs-Licht und/oder das gesamte Anregungs-Licht, welches von dem Konversionselement emittiert wird, exakt lediglich auf den absorbierenden Bereich trifft.

Auf diese Weise gelangt das gesamte Anregungs-Licht auf den absorbierenden Bereich, bei minimaler Größe des absorbierenden Bereiches.

Grundsätzlich kommen als Materialien für den Anregungs-Licht absorbierenden Bereich vorzugsweise Duroplaste oder auch Elastomere zum Einsatz, wobei sich Elastomere insbesondere im Zusammenhang mit einem Verschlusselement als vorteilhaft erweisen, d.h., dass das Verschlusselement aus dem Elastomer gebildet ist. Duroplaste weisen im Gegensatz zu Thermoplasten, welche prinzipiell auch geeignet sind, den Vorteil auf, dass diese ab einer bestimmte Grenztemperatur (Zersetzungstemperatur) sich zersetzen (verbrennen), es somit nicht zu einem unkontrollierten Schmelzen und Zerrinnen als flüssiger Kunststoff kommt. Elastomere verfügen, sofern es sich nicht um thermoplastische Elastomere handelt, über vergleichbar gute Eigenschaften wie Duroplaste.

Die absorbierenden Eigenschaften des absorbierenden Bereiches ergeben sich beispielsweise über die dunkle, insbesondere schwarze Färbung des jeweiligen Materials in dem absorbierenden Bereich.

Im Folgenden ist die Erfindung an Hand der Zeichnung näher erörtert. In dieser zeigt
Fig. 1 eine schematische Darstellung einer ersten nicht erfindungsgemäßen Beleuchtungsvorrichtung,
Fig. 2 eine schematische Darstellung einer Ausführungsform einer erfindungsgemäßen Beleuchtungsvorrichtung,
Fig. 3 einen vergrößerten Ausschnitt aus Figur 1 im Bereich des absorbierenden Bereiches,
Fig. 4 einen vergrößerten Ausschnitt aus Figur 2 im Bereich des absorbierenden Bereiches gebildet durch ein Verschlusselement nach der Erfindung, und
Fig. 4a den Ausschnitt aus Figur 4 vor dem Einsetzen des Verschlusselementes in den Reflektor.

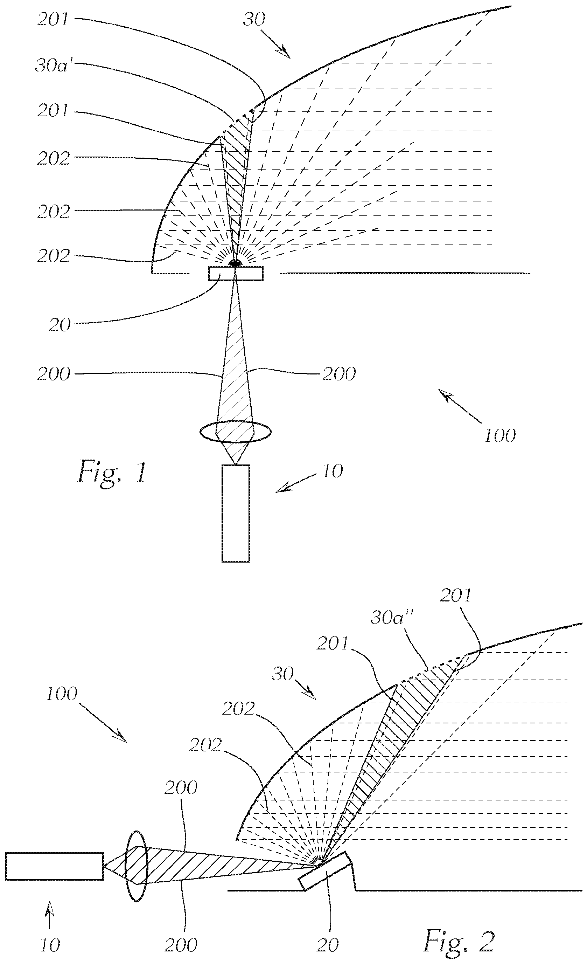

Figur 1 zeigt eine Beleuchtungsvorrichtung 100, welche eine Laserlichtquelle 10, ein Konversionselement 10 und einen Reflektor 30 umfasst. Die Laserlichtquelle 10 emittiert Anregungs-Licht 200 ("Primärlicht"), welches auf das Konversionselement 20 trifft, von diesem wie eingangs beschrieben z.B. in weißes Mischlicht 202 konvertiert wird, von dem Konversionselement 20 auf den Reflektor 30 emittiert und von diesem in den Außenraum zur Bildung einer Lichtverteilung emittiert wird.

Bei der Lichtverteilung, die mit der Beleuchtungsvorrichtung erzeugt werden kann, handelt es sich beispielsweise um eine Abblendlichtverteilung, eine Fernlichtverteilung, einen Teil einer Abblendlicht- oder Fernlichtverteilung, einer Abbiegelicht-, Kurvenlicht-, Autobahnlicht-, Nebellicht-, Schlechtwetterlicht- oder Blinklichtverteilung, etc., oder einem oder mehreren Teilen davon.

Figur 2 zeigt ebenfalls eine Beleuchtungsvorrichtung 100, für welche die oben getroffenen Aussagen identisch zutreffen.

Der Unterschied zwischen den Beleuchtungsvorrichtungen 100 in Figur 1 und 2 liegen in der Art des Konversionselementes 20 und daraus resultierend der anderen Anordnung.

Die Beleuchtungsvorrichtung 100 gemäß Figur 1 weist ein transmissives Konversionselement 20 auf, welches Mischlicht 202 zumindest auf seiner der Laserlichtquelle 10 abgewandten Seite/Fläche abstrahlt. Im Grunde kann dabei Licht in alle Richtungen von dem Konversionselement abgestrahlt werden, und z.B. können optische Vorrichtungen vor dem Konversionselement, die wie ein Filter wirken, eingesetzt werden, um so das rückgestrahlte konvertierte Licht auch nützen zu können, das weiterführende optische System befindet sich jedoch auf der der Laserlichtquelle abgewandten Seite/Fläche.

Anregungs-Licht 200, welches auf das Konversionselement 20 trifft, trifft in erster Linie, vor allem bei Vorliegen eines oben beschriebenen Fehlerfalles, in dem Strahlkegel 201 auf den Reflektor 30. Entsprechend ist ein Anregungs-Licht absorbierender Bereich 30a' an dem Reflektor 30 in einem Bereich des Reflektors, welcher von dem Anregungs-Licht-Kegel 201 getroffen wird (exakt gesprochen die Schnittfläche zwischen der Reflektorfläche und dem Kegel 201) vorgesehen, sodass Anregungs-Licht 201, welches auf den Reflektor trifft, absorbiert wird.

Die Beleuchtungsvorrichtung 100 gemäß Figur 2 weist ein reflektives Konversionselement 20 auf, welches Mischlicht 202 auf seiner der Laserlichtquelle 10 zugewandten Seite/Fläche abstrahlt. Anregungs-Licht 200, welches auf das Konversionselement 20 trifft, wird in erster Linie, vor allem bei Vorliegen eines oben beschriebenen Fehlerfalles, in dem Strahlkegel 201 auf den Reflektor 30 reflektiert. Entsprechend ist ein Anregungs-Licht absorbierender Bereich 30a" an dem Reflektor 30 in einem Bereich des Reflektors, welcher von dem Anregungs-Licht-Kegel 201 getroffen wird (exakt gesprochen die Schnittfläche zwischen der Reflektorfläche und dem Kegel 201) vorgesehen, sodass Anregungs-Licht 201, welches auf den Reflektor trifft, absorbiert wird.

Figur 2 zeigt dabei nur schematisch das Konversionselement. Häufig ist dieses auf einem Träger angeordnet oder umfasst einen Träger, welcher vorzugsweise reflektierend ausgeführt ist, damit das Mischlicht mit höherer Ausbeute abgestrahlt wird. Im Fehlerfall, z.B. dem Herunterfallen des Konversionselementes von dem Träger, wird durch Reflexionen des Laserstrahls an dem reflektierenden Träger allerdings das Sicherheitsrisiko deutlich erhöht. Mit der erfindungsgemäßen Ausgestaltung wie oben beschrieben kann dieses Risiko deutlich reduziert werden.

Im Folgenden werden anhand der beiden Beleuchtungsvorrichtungen 100 aus Figur 1 und Figur 2 unterschiedliche Ausgestaltungen eines absorbierenden Bereiches 30a', 30a" an dem jeweiligen Reflektor 30 beschrieben. Es ist anzumerken, dass die Ausgestaltung des absorbierenden Bereiches der Beleuchtungsvorrichtung 100 aus Figur 1 genauso bei der Beleuchtungsvorrichtung aus Figur 2 an Stelle des dort gezeigten absorbierenden Bereiches 30a" implementiert sein könnte, und ebenso kann der in Folge im Detail beschriebene absorbierende Bereich 30a" gemäß Beleuchtungsvorrichtung nach Figur 2 auch in dem Reflektor Figur 1 an Stelle des dort gezeigten absorbierenden Bereiches 30a' ausgestaltet bzw. implementiert sein. Weiters ist es auch denkbar, dass eine Beleuchtungsvorrichtung wie in den beiden Figuren gezeigt zwei oder mehrere absorbierende Bereiche für Anregungs-Licht aufweist. Diese absorbierenden Bereiche können identisch ausgebildet sein, es können aber auch unterschiedlich realisierte absorbierende Bereiche wie im Folgenden dargestellt gemeinsam bei einer Beleuchtungsvorrichtung implementiert sein.

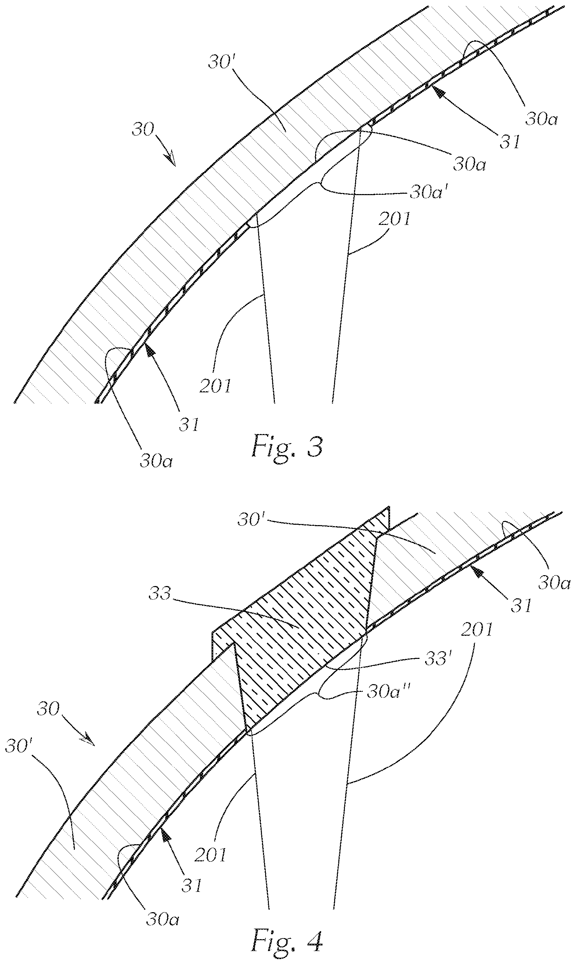

Figur 3 zeigt einen Detailausschnitt aus Figur 1. Dargestellt ist ein Abschnitt eines nicht erfindungsgemäßen Reflektors 30, wobei dieser Reflektor 30 aus einem Reflektorkörper 30' besteht, und wobei dieser Reflektorkörper 30' eine Reflexionsfläche 31 umfasst bzw. aufweist, welche das von dem Wellenlängenkonversionselement 20 erzeugte, im sichtbaren Wellenlängenbereich liegende Licht bzw. Mischlicht reflektiert. Dieses reflektierte Licht erzeugt, wie anhand von Figur 1 bereits erläutert, in weiterer Folge eine Lichtverteilung im Außenraum vor der Beleuchtungsvorrichtung.

Die Reflexionsfläche 31 ist dabei auf einer Seite des Reflektors 30, nämlich auf der sogenannten Reflektorfläche 30a des Reflektorkörpers 30' aufgebracht. Beispielsweise kann die Reflektorfläche 30a mit der Reflexionsfläche 31 beschichtet sein, wie dies in weiterer Folge noch näher erläutert wird. Die Reflexionsfläche 31 ist aus einem Licht reflektierenden Material gebildet, um eben wie oben schon beschrieben das im sichtbaren Wellenlängenbereich liegende Licht reflektieren zu können.

Die Reflektorfläche 30a weist einen Bereich auf, welcher frei von der Reflexionsfläche 31 ist. Dieser freie Bereich stellt einen Anregungs-Licht absorbierenden Bereich 30a' dar, welcher auf ihm auftreffendes Anregungs-Licht zumindest teilweise, vorzugsweise großteils oder besonders vorteilhaft vollständig absorbiert. Der Anregungs-Licht absorbierende Bereich 30a', welcher frei von der Reflexionsfläche 31 ist, kann dabei derart erzeugt werden, dass bei einem Aufbringen, z.B. Beschichten der Reflektorfläche 30a diese in dem gewünschten Bereich nicht mit dem reflektierenden Material versehen, z.B. beschichtet wird, beispielsweise kann der Bereich abgeklebt oder anderweitig vor dem Aufbringen des reflektierenden Materials abgedeckt sein, so dass in diesem Bereich kein Material, welches die Reflexionsfläche 31 bildet, gelangt. Es ist aber auch möglich, dass die gesamte Reflektorfläche 30a vorerst mit dem reflektierenden Material versehen, beispielsweise beschichtet wird und anschließend in dem gewünschten Bereich, welcher absorbierend für zumindest das Anregungs-Licht wirken soll, die Reflexionsfläche 31 wieder entfernt wird.

Der absorbierende Bereich 30a' ist somit aus dem den Reflektorkörper 30' bildenden "Grundmaterial" gebildet, welches Grundmaterial aus einem Licht absorbierenden Material, insbesondere das Anregungs-Licht absorbierenden Material besteht. Dieses Grundmaterial ist z.B. aus PEI (Polyetherimid) oder PC (Polycarbonat) gebildet oder enthält eines dieser Materialien, welche eine hohe Temperaturbeständigkeit aufweisen.

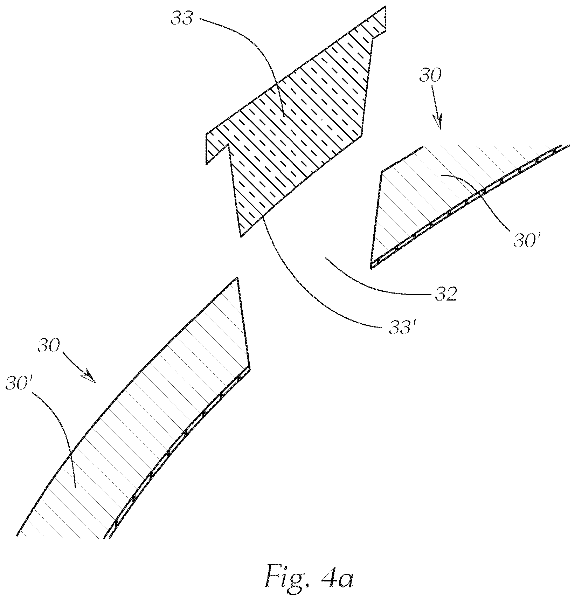

Figur 4 und Figur 4a zeigen erfindungsgemäß einen Reflektor 30 aus Figur 2 in einer Detailansicht. Bei der gezeigten Ausgestaltung weist wiederum der Reflektor 30 einen Reflektorkörper 30' auf, wobei der Reflektorkörper 30' mit einer Reflexionsfläche 31 versehen ist. In der gezeigten Ausführungsform besteht der Reflektor 30 also wiederum wie in Figur 1 gezeigt aus dem Reflektorkörper 30', welcher eine Reflektoroberfläche 30a aufweist, auf welcher die Reflexionsfläche 31 aufgebracht, beispielsweise beschichtet ist. Es kann bei dieser Ausführungsform aber auch vorgesehen sein, dass beispielsweise der gesamte Reflektor 30 bereits aus einem reflektierenden Material gebildet ist, dass also Reflektorkörper 30' und Reflexionsfläche 31 einstückig ausgebildet sind. In diesem Fall entfällt die terminologische Unterteilung in Reflektorfläche und Reflexionsfläche.

Bei der gemäß Figur 2 und Figuren 4, 4a gezeigten Ausführungsform ist, unabhängig von der konkreten Art der Ausgestaltung des Reflektors 30 (siehe vorstehenden Absatz) vorgesehen, dass der Reflektor 30 bzw. Reflektorkörper 30' eine Durchgangsöffnung 32 aufweist, wobei diese Durchgangsöffnung 32 mit einem Verschlusselement 33 verschlossen werden kann. Die Oberfläche 33' des Verschlusselementes 33, welche im eingesetzten Zustand des Verschlusselementes 33 auf der Seite der Reflexionsfläche 31 liegt, bildet den das Anregungs-Licht zumindest teilweise, vorzugsweise großteils oder vollständig absorbierenden Bereich 30a". Vorzugsweise ist, wie dies in Figur 4 dargestellt ist, das Verschlusselement 33 derart ausgebildet, dass im eingesetzten Zustand die Oberfläche 33'des Verschlusselementes 33 die Durchgangsöffnung 32 vollflächig verschließt. Insbesondere ist es dabei von Vorteil, wenn die Oberfläche 33' des Verschlusselementes 33 im Wesentlichen stetig an die Reflexionsfläche 31 anschließt.

Das Verschlusselement 33 ist vorzugsweise aus einem absorbierenden Material (wie eingangs schon erwähnt z.B. aus Polycarbonat, PBT oder ABS) gebildet. Mit dem Verschlusselement 33 wird die Durchgangöffnung 32 vorzugsweise von der Rück- bzw. Außenseite des Reflektorkörpers 30' abgedeckt bzw. vorzugsweise durch Einsetzen des entsprechend an die Durchgangsöffnung 32 angepassten Verschlusselementes 33 in die Durchgangsöffnung 32 wie oben beschrieben verschlossen.

Das absorbierende Material des Verschlusselementes 33 ist gegen den Temperatureintrag durch das Laserlicht nicht resistent. Dadurch wird vorerst das Laserlicht an dem absorbierenden Bereich 30a" absorbiert, bis ab einer gewissen Grenz-Temperatur (z.B. von 120°C) das Verschlusselement 33 schmilzt oder verbrennt. Laserlicht tritt dann durch die offene Durchgangsöffnung 32 durch und verliert sich im Hinterbau der Beleuchtungsvorrichtung.

Der absorbierende Bereich auch mittels eines Mehr-Komponenten Spritzgieß-Verfahrens hergestellt werden. Der absorbierende Bereich kann a) aus einem absorbierenden und gegen den Temperatureintrag durch das Laserlicht resistentes Material gefertigt oder b) aus einem absorbierenden, aber gegen den Temperatureintrag nicht resistenten Material ausgeführt werden, jeweils mit den bereits oben beschriebenen Auswirkungen.

Ein Spritzgieß-Verfahren ist zur Herstellung eines Reflektors im Zusammenhang mit der vorliegenden Erfindung am besten geeignet. Die Verwendung eines Druckguss-Verfahrens, insbesondere in Kombination mit einem Spritzguss-Verfahren ist prinzipiell auch denkbar (z.B. könnte ein Reflektorkörper mit einer Öffnung im Druckguss-Verfahren und das Verschlusselement im Spritzgieß-Verfahren hergestellt werden).

Mit einer Ausführungsform gemäß Figur 4 wird verhindert, dass im Fehlerfall Laserlicht aus dem Scheinwerfer austreten kann bzw. wird das dahingehende Risiko verringert.

Bei der Herstellung eines Reflektorkörpers mit einer Öffnung entsteht bei einem Spritzgieß-Verfahren verfahrenstechnisch bedingt eine sogenannte "Bindenaht", welche unter Umständen aus ästhetischen Gründen unerwünscht sein kann. außerdem kann es in dem Bereich der Begrenzung der Öffnung in nachteiliger Weise zu Streulicht kommen.

Mit der Variante gemäß Figur 3 (Entfernen oder Nichtanbringen der reflektierenden Beschichtung) , welche nicht unter die vorliegende Erfindung fällt, wird auch das Problem der Bindenaht gelöst. Nachdem keine Öffnung in dem Reflektorkörper erzeugt werden muss, kann auch keine Bindenaht entstehen. Die Beschichtung ist in der Regel sehr dünn, typische Werte liegen im Bereich von 140 nm, sodass der Übergang bzw. die Stufe zwischen beschichtetem Bereich und unbeschichtetem Bereich lichttechnisch irrelevant ist, dort kann daher auch kein nachteiliges Streulicht entstehen.

Ein solches nachteiliges Streulicht entsteht bei entsprechend genauer Fertigung auch bei einer Ausführungsform gemäß Figur 4 in dem Bereich zwischen Öffnung und Verschlusselement nicht.

## Patentansprüche

1. Beleuchtungsvorrichtung (100), insbesondere für ein Kraftfahrzeug, umfassend:
zumindest eine Laser-Lichtquelle (10);
ein Wellenlängen-Konversionselement (20), welches dazu eingerichtet ist, Anregungs-Licht von der zumindest einen Laser-Lichtquelle (10) zu empfangen;
und einen Reflektor (30) mit zumindest einem Reflektorkörper (30'), welcher zumindest eine Reflektorkörper (30') eine Reflexionsfläche (31) umfasst, welche Reflexionsfläche (31) das von dem Wellenlängen-Konversionselement (20) im sichtbaren Wellenlängenbereich emittierte Licht reflektiert, wobei der Reflektor (30) an seiner die Reflexionsfläche (31) tragenden Reflektorfläche (30a) mit der Reflexionsfläche (31) versehen ist, und wobei die Reflektorfläche (30a) zumindest einen Bereich (30a") aufweist, welcher frei von der Reflexionsfläche (31) ist, und wobei die Reflektorfläche (30a) zumindest in dem Bereich (30a"), welcher frei von der Reflexionsfläche (31) ist, derart ausgebildet ist, dass in dem Bereich (30a") auftreffendes Anregungs-Licht zumindest teilweise absorbiert wird, und wobei der Anregungs-Licht absorbierende Bereich (30a") derart in bzw. an der Reflektorfläche (30a) angeordnet ist, dass direkt von der Laser-Lichtquelle (10) auf der Reflektorfläche auftreffendes Anregungs-Licht und/oder Anregungs-Licht, welches von dem Konversionselement (20) emittiert wird, auf den absorbierenden Bereich (30a") auftrifft, wobei
der Reflektorkörper (30') zumindest eine Durchgangsöffnung (32) aufweist, **dadurch gekennzeichnet, dass** die zumindest eine Durchgangsöffnung (32) mit einem Verschlusselement (33) verschlossen ist, wobei die Oberfläche (33') des Verschlusselementes (33), welche auf der Seite der Reflexionsfläche (31) liegt, den das Anregungs-Licht zumindest teilweise absorbierenden Bereich (30a") bildet, wobei
die Oberfläche (33') des Verschlusselementes (33) die Durchgangsöffnung (32) vollflächig verschließt, und wobei
der zumindest eine absorbierende Bereich (30a") oberhalb einer Grenztemperatur nicht temperaturbeständig ausgebildet ist,
und wobei
das Verschlusselement (33) derart ausgebildet und/oder derart in die Durchgangsöffnung (32) eingesetzt ist, dass die Oberfläche (33') im Wesentlichen stetig in die Reflexionsfläche (31) übergeht.

2. Beleuchtungsvorrichtung nach Anspruch 1, **dadurch gekennzeichnet, dass** die Reflektorfläche (30a) mit einem reflektierenden Material, welches die Reflexionsfläche (31) bildet, beschichtet ist.

3. Beleuchtungsvorrichtung nach Anspruch 1 oder 2, **dadurch gekennzeichnet, dass** der zumindest eine Anregungs-Licht absorbierende Bereich (30a") derart ausgebildet ist, dass das Anregungs-Licht großteils oder vollständig absorbiert wird.

4. Beleuchtungsvorrichtung nach einem der Ansprüche 1 bis 3, **dadurch gekennzeichnet, dass** die Grenztemperatur 120°C beträgt.

5. Beleuchtungsvorrichtung nach einem der Ansprüche 1 bis 4, **dadurch gekennzeichnet, dass** der absorbierende Bereich (30a") derart angeordnet und hinsichtlich seiner Flächenerstreckung derart ausgebildet ist, dass das gesamte direkt von der Laser-Lichtquelle (10) auf der Reflektorfläche auftreffende Anregungs-Licht und/oder das gesamte Anregungs-Licht, welches von dem Konversionselement (20) emittiert wird, auf den absorbierenden Bereich (30a") trifft.

6. Beleuchtungsvorrichtung nach Anspruch 5, **dadurch gekennzeichnet, dass** der absorbierende Bereich (30a") derart angeordnet und hinsichtlich seiner Flächenerstreckung derart ausgebildet ist, dass das gesamte direkt von der Laser-Lichtquelle (10) auf der Reflektorfläche auftreffende Anregungs-Licht und/oder das gesamte Anregungs-Licht, welches von dem Konversionselement (20) emittiert wird, exakt lediglich auf den absorbierenden Bereich (30a") trifft.

7. Kraftfahrzeugscheinwerfer mit zumindest einer Beleuchtungsvorrichtung nach einem der Ansprüche 1 bis 6.

8. Kraftfahrzeug mit zumindest einer Beleuchtungsvorrichtung nach einem der Ansprüche 1 bis 6 oder mit zumindest einem Kraftfahrzeugscheinwerfer nach Anspruch 7.

## Claims

1. Lighting device (100), in particular for a motor vehicle, comprising:
at least one laser light source (10);
a wavelength conversion element (20) adapted to receive excitation light from the at least one laser light source (10); and
and a reflector (30) having at least one reflector body (30'), said at least one reflector body (30') comprising a reflecting surface (31), said reflecting surface (31) reflecting the light emitted in the visible wavelength range by said wavelength conversion element (20), wherein said reflector (30) is provided with said reflecting surface (31) at its reflector surface (30a) carrying said reflecting surface (31), and wherein
the reflector surface (30a) comprises at least one region (30a") which is free of the reflection surface (31), and wherein the reflector surface (30a), at least in the region (30a") free of the reflection surface (31), is configured such that excitation light impinging in the region (30a") is at least partially absorbed, and wherein the region (30a") absorbing excitation light is arranged in or at the reflector surface (30a) such that excitation light which impinges on the reflector surface directly from the laser light source (10) and/or excitation light which is emitted by the conversion element (20) impinges on the absorbing region (30a"), wherein
said reflector body (30') has at least one through opening (32),
**characterized in that** said at least one through opening (32) is closed with a closure member (33),
wherein the surface (33') of said closure member (33) located on the side of said reflecting surface (31) forms said region (30a") absorbing excitation light at least partially, wherein
the surface (33') of the closure element (33) closes the entire area of passage opening (32), and wherein
the at least one absorbing region (30a") is realized non-temperature-resistant above a limit temperature
and wherein the closure element (33) is configured, and/or inserted into the through-opening (32),
such that the surface (33') merges substantially continuously into the reflection surface (31).

2. Lighting device according to claim 1, **characterized in that** the reflector surface (30a) is coated with a reflective material which forms the reflection surface (31).

3. Lighting device according to claim 1 or 2, **characterized in that** the at least one region (30a") absorbing excitation light is realized so as to largely or completely absorb the excitation light.

4. Lighting device according to any one of claims 1 to 3, **characterized in that** the limit temperature is 120 °C.

5. Lighting device according to any one of claims 1 to 4, **characterized in that** the absorbing region (30a") is arranged and designed regarding its surface extension such that the entire excitation light which impinges on the reflector surface directly from the laser light source (10) and/or the entire excitation light which is emitted by the conversion element (20) impinges on the absorbing region (30a").

6. Lighting device according to claim 5, **characterized in that** the absorbing region (30a") is arranged and designed regarding its surface extension such that the entire excitation light which impinges on the reflector surface directly from the laser light source (10) and/or the entire excitation light which is emitted by the conversion element (20) impinges exactly only on the absorbing region (30a").

7. Motor vehicle headlamp comprising at least one lighting device according to any one of claims 1 to 6.

8. Motor vehicle comprising at least one lighting device according to any one of claims 1 to 6 or comprising at least one motor vehicle headlamp according to claim 7.

## Revendications

1. Dispositif d'éclairage (100), notamment pour un véhicule automobile, comportant :
au moins une source de lumière laser (10) ;
un élément de conversion de longueur d'onde (20) adapté pour recevoir de la lumière d'excitation provenant de ladite au moins une source de lumière laser (10) ;
et un réflecteur (30) ayant au moins un corps de réflecteur (30'), lequel au moins un corps de réflecteur (30') comporte une surface réfléchissante (31), laquelle surface réfléchissante (31) réfléchit la lumière émise par ledit élément de conversion de longueur d'onde (20) dans la plage de longueur d'onde visible, ledit réflecteur (30) étant pourvu de ladite surface réfléchissante (31) au niveau de sa surface de réflecteur (30a) portant ladite surface réfléchissante (31), et
la surface de réflecteur (30a) présentant au moins une zone (30a") qui est exempte de la surface de réflexion (31), et la surface de réflecteur (30a), au moins dans la zone (30a") qui est exempte de la surface de réflexion (31), étant conçue de telle sorte que de la lumière d'excitation incidente dans la zone (30a") est absorbée au moins partiellement, et la zone (30a") absorbant la lumière d'excitation étant disposée dans ou sur la surface de réflecteur (30a) de telle sorte que de la lumière d'excitation qui est incidente dans la surface de réflecteur directement de la source de lumière laser (10) et/ou de la lumière d'excitation qui est émise par l'élément de conversion (20) est incidente sur la région d'absorption (30a"),
ledit corps de réflecteur (30') ayant au moins une ouverture traversante (32),
**caractérisé en ce que** ladite au moins une ouverture traversante (32) est fermée par un élément de fermeture (33), la surface (33') dudit élément de fermeture (33) situé au côté de ladite surface réfléchissante (31) formant ladite zone d'absorption au moins partielle de la lumière d'excitation (30a"),
la surface (33') de l'élément de fermeture (33) ferme l'ouverture de passage (32) sur toute la surface, et
ladite au moins une zone d'absorption (30a") est conçue non résistante à la température au-dessus d'une température limite,
et l'élément de fermeture (33) étant formé et/ou inséré dans l'ouverture traversante (32) de telle sorte que la surface (33') se prolonge de manière sensiblement continue dans la surface de réflexion (31).

2. Dispositif d'éclairage selon la revendication 1, **caractérisé en ce que** la surface du réflecteur (30a) est revêtue d'un matériau réfléchissant formant la surface de réflexion (31).

3. Dispositif d'éclairage selon la revendication 1 ou 2, **caractérisé en ce que** ladite au moins une zone d'absorption de lumière d'excitation (30a") est conçue de telle sorte que la lumière d'excitation est largement ou complètement absorbée.

4. Dispositif d'éclairage selon l'une quelconque des revendications 1 à 3, **caractérisé en ce que** la température limite est de 120°C.

5. Dispositif d'éclairage selon l'une quelconque des revendications 1 à 4, **caractérisé en ce que** la zone d'absorption (30a") est disposée et conçue quant à son extension de surface de telle sorte que toute la lumière d'excitation qui est incidente sur la surface du réflecteur directement de la source de lumière laser (10) et/ou toute la lumière d'excitation qui est émise par l'élément de conversion (20) est incidente sur la zone d'absorption (30a").

6. Dispositif d'éclairage selon la revendication 5, **caractérisé en ce que** la zone d'absorption (30a") est disposée et conçue quant à son extension de surface de telle sorte que toute la lumière d'excitation qui est incidente sur la surface du réflecteur directement de la source de lumière laser (10) et/ou toute la lumière d'excitation qui est émise par l'élément de conversion (20) est incidente exactement seulement sur la zone d'absorption (30a").

7. Projecteur de véhicule automobile comportant au moins un dispositif d'éclairage selon l'une quelconque des revendications 1 à 6.

8. Véhicule automobile comportant au moins un dispositif d'éclairage selon l'une quelconque des revendications 1 à 6 ou comportant au moins un projecteur de véhicule automobile selon la revendication 7.
